# EUROPEAN PATENT SPECIFICATION

(11) **EP 3 224 825 B1**
(45) Date of publication and mention of the grant of the patent: **26.12.2018**
(21) Application number: 15801932.3
(22) Date of filing: 19.10.2015
(51) Int. Cl.: G09C 5/00, H04L 9/32

(54) **ELECTRONIC WRITING DEVICE, SYSTEM AND METHOD FOR SECURING A DOCUMENT IN A DIGITAL FORM WITH THE USE OF A HAND-WRITTEN SIGNATURE**
VORRICHTUNG ZUM ELEKTRISCHEN SCHREIBEN, SYSTEM UND VERFAHREN ZUR SICHERUNG EINES DOKUMENTS IN DIGITALER FORM MIT DER VERWENDUNG EINER HANDGESCHRIEBENEN SIGNATUR
DISPOSITIF D'ÉCRITURE ÉLECTRONIQUE, SYSTÈME ET PROCÉDÉ POUR SÉCURISER UN DOCUMENT SOUS FORME NUMÉRIQUE À L'AIDE D'UNE SIGNATURE MANUSCRITE

(30) Priority: 25.11.2014 PL 41022014
(43) Date of publication of application: 04.10.2017
(73) Proprietor: Tabor, Michal, 00-621 Warszawa (PL)
(72) Inventor: TABOR, Michal, 00-621 Warszawa (PL)
(74) Representative: Patpol Kancelaria Patentowa Sp. z o.o.
(86) International application number: PCT/IB2015/058030
(87) International publication number: WO 2016/083917

(56) References cited:
- WO-A1-03/009217
- WO-A1-03/017185
- WO-A2-2011/112113
- WO-A2-2012/003570

## Description

The invention relates to an electronic writing device, a system and a method for securing a document in a digital form with the use of a hand-written signature placed by means of said writing device, i.e. an e-pen. The invention applies in particular to business, e.g. for accepting content of documents, for signing contracts, for generating accounting documents, tenders, or to professions of public trust, for certifying information, as well as to public administration, e.g. for submitting applications and requests, for acknowledging receipt, for taking notes, etc. i.e. wherever it is desirable to have authentic and integral documents in a digital form. Cryptographic card systems which have their electronic signatures based on the mechanism of unlocking functions of a cryptographic device by means of an individual password PIN of the signer are currently most commonly used for the electronic signature. PIN in the card is designed to ensure that the signer is a specific individual named on the certificate, which allows actually submit a signature by any person other than the one named on the certificate, for example as a result of passing his own card with a PIN to any other person. Therefore, the fact of submitting such a signature remains undetectable.

Also, devices and systems for securing a document with an electronic signature by means of an electronic writing device are known from the prior art, wherein the writing device supporting a special paper is provided with appropriate sensors in order to gather data about the path of the hand-written signature. For example, an electronic writing device, especially for appending a secure signature to an electronic document, having a housing, a central processing unit (10) with a memory (20) in which specimen signatures are stored, including a cryptographic component that allows conducting encryption operations, a battery (109), a communication component (30), an battery (41) and a set of sensors (S1, S2, S3), including a pressure sensor, a tilt/motion sensor - accelerometer, is known from document US2005039015. This writing device communicates with a host system (H). After comparing the collected hand-written signature with the specimen signature stored in the memory, the writing device gives a signal to the H system that it is ready to receive data. As a result, the H system sends a hash of the electronic document to the writing device. Then, the central processing unit (10) of the writing device encrypts the data stream with the use of a private key stored in the memory (20) and sends the so encrypted stream to the H system which may be any system running on a device equipped with a processor. The private key is uploaded to the writing device as a result of cooperation with the provider of certification service prior to marketing the electronic writing devices. The specimen signature is stored at the stage of configuration and training of the writing device. The user can pass his electronic writing device to another user, wherein another private key and specimen signature have to be uploaded to the device. A disadvantage of this solution is that the device is assigned to a specific user, and passing the writing device to another user requires additional operations involving third parties, which makes this solution not suitable for applications, e.g., when the other user is completely unknown to the first user until the other user signs the electronic document in his presence. Furthermore, another disadvantage of this known solution is the use of a hand-written signature placed by means of the electronic writing device only for the purposes of authenticating a user to the device, and not ensuring the integrity of the signed document, among others, by associating the hand-written signature with characteristic features of the document being secured.

This problem was partially solved by the device and the system disclosed in document US2003012374, wherein the system consists of a computer, an adapter with a secure processor, and an electronic pen which contains a cryptographic component used to encrypt the obtained data on the signing process for their safe transmission to the adapter with another cryptographic component which is responsible for submitting an electronic signature. This document discloses the concept of associating a hand-written signature with characteristic features of the signed document with the use of the cryptographic component (9) in the pen. In one alternative embodiment, a hash of the document is sent to the pen, and the pen generates, on its basis and based on the data on the process of placing a hand-written signature, a so-called verification ID with the use of a private key of the pen, and sends said ID to the adapter in order to submit an electronic signature. The pen according to document US2003012374 is produced and serviced by a trusted manufacturer. One disadvantage of this solution is, however, that the generated verification ID does not sufficiently secure the collected data, and only confirms the fact of placing a hand-written signature.

Furthermore, a disadvantage of the device and the system, and the method for securing an electronic document known from document US2005039015 and from document US2003012374 is the inability to provide a complete integrity of data because, in this system, there are several devices that collect data vulnerable to counterfeiting, necessary to secure the document, and send them to each other before finally securing the document. This causes a risk of interfering with the data which are used to secure the document.

This problem was partially solved by the system disclosed in international application WO2014122297. This document discloses a method of submitting an electronic signature taking into account the so called context by merging characteristic features of the hand-written signature and elements identifying the signed document in a unique way. In this document, for obtaining a hand-written signature, the use of PCI-PTS payment terminals was suggested, which aims at excluding the possibility of unauthorised use of data from the process of placing the hand-written signature as one and the same device collects data on the process of placing the hand-written signature and collets data on the document, and then submits an electronic signature. However, a disadvantage of this system is that it cannot be widely used in companies or offices as it is neither mobile nor handy, and it is dedicated primarily to installations in public places.

Therefore, it is an object of the invention to provide a device, a system and a method for securing a document with an electronic signature or seal, which would not have any of the disadvantages of the prior art.

The essence of the invention consists in that an electronic writing device for securing a document in a digital form with the use of a hand-written signature, comprising a housing, a power source, a transceiver unit adapted for communication with an external device, a cryptographic component, at least one internal sensor capable of collecting data on the process of placing a signature, means for gathering a digital characteristic feature of the document being secured is characterised in that it further comprises means for stimulating, in the external device, a detector of the process of placing a signature, means for simultaneously gathering data on the process of placing a hand-written signature from the external device and data from at least one internal sensor, and in that the cryptographic component is adapted to generate an electronic seal and to provide it at least in the data and from the process of placing a signature and a digital characteristic feature of the document being secured.

Preferably, the device additionally has means for comparing data on the process of placing a signature, obtained from at least one internal sensor, with data on the process of placing a signature, obtained from the external device.

It is also preferable that the cryptographic component is adapted to submit an advanced electronic signature.

Preferably, the device additionally has means for authentication of the process of placing a signature based on a comparison of data on the process of placing a signature, obtained from at least one internal sensor, with data on the process of placing a signature, obtained from the external device.

Preferably, the cryptographic component is adapted to uniquely pair with the external device.

In another aspect, the essence of the invention consists in that a system for securing a document in a digital form with the use of a hand-written signature, comprising an electronic writing device adapted to collect data on the process of placing a signature, and an external device communicating with it which is adapted to generate and send at least one digital characteristic feature of the document being secured, is characterised in that the external device is equipped with a detector of the process of placing a signature realised using the electronic writing device, the electronic writing device is equipped with means for stimulating, in the external device, a detector of the process of placing a signature, the electronic writing device is equipped with means for simultaneously gathering data on the process of placing a hand-written signature, sent from the external device, and data from at least one internal sensor, the electronic writing device is adapted to generate an electronic seal and to provide it at least in the data and from the process of placing a signature and a digital characteristic feature of the document being secured.

Preferably, the external device generates and sends, to the electronic writing device, a hash of the document which is to be secured.

Preferably, the electronic writing device additionally has means for comparing data on the process of placing a signature, obtained from at least a sensor, with data on the process of placing a signature, obtained from the external device.

It is also preferable that the cryptographic component of the electronic writing device is adapted to submit an advanced electronic signature.

Preferably, the system additionally has means for authentication of the process of placing a signature based on a comparison of data on the process of placing a hand-written signature, obtained from at least a sensor, with data on the process of placing a signature, obtained from the external device.

Preferably, the detector of the process of placing a signature, realised using the electronic writing device, is a touch screen.

In yet another form, the essence of the invention consists in that a method of securing a document in a digital form with the use of a hand-written signature, comprising a step of placing a hand-written signature by means of an electronic writing device to gather data on the process of placing a hand-written signature therein, a step of collecting, in the electronic writing device, at least one digital characteristic feature of the document being secured, a step of securing the electronic document with an electronic signature is characterised in that the step of placing a hand-written signature with the use of the electronic writing device is performed on an external device equipped with a detector of the process of placing a signature, and in that the method further comprises a step of gathering, in the electronic writing device, data on the process of placing a hand-written signature, obtained by the external device equipped with the detector of the process of placing a signature, and data on the process of placing a hand-written signature, obtained at least from one internal sensor, collected in parallel, a step of generating an electronic seal and providing it in at least one digital characteristic feature of the document, and data on the process of placing a hand-written signature, obtained in parallel from the electronic writing device and from the external device equipped with the detector of the process of placing a signature, a step of sending the so secured data which constitute an electronic signature to the external device.

Preferably, the step of gathering, in the electronic writing device, at least one digital characteristic feature of the document being secured consists in gathering a hash of the document to be secured, generated by the external device.

It is preferable that the method further comprises a step of comparing, in the electronic writing device, data on the process of placing a signature, obtained from at least a sensor, with data on the process of placing a signature, obtained from the external device, and/or authenticating, based on this comparison, the process of placing a hand-written signature.

Preferably, the method further comprises a step of submitting, in the electronic writing device, an advanced electronic signature.

The idea of an electronic writing device for securing a document in a digital form with the use of a hand-written signature according to the invention consists in that it is adapted to simultaneously collect data on the process of placing a hand-written device from two sources, and to collect information on digital characteristic features of the document being secured, in order to further secure them by providing them with an electronic seal prior to sending them to any other device in order to add them to the document being secured as an electronic signature. According to the provisions, the term "electronic seal" should be understood as an advanced electronic signature designated as an electronic seal, authenticating a legal person or an organisational unit without legal personality.

By equipping the electronic writing device for securing documents in a digital form with a cryptographic component adapted to generate an electronic seal based on digital characteristic features of the electronic document and characteristic features of the submitted hand-written signature, it became possible to eliminate the sent data susceptible to counterfeiting prior to securing the document, which guarantees the authenticity and integrity of documents in a digital form, secured with the use of a fixed and identifiable unit of the device.

By adapting the electronic writing device for securing documents in a digital form to receive data on the path of the submitted signature (i.e. on image, track in function of time, motion, pressure, etc.) from any device equipped with a touch screen (in particular a mobile device equipped with a touch screen), it is possible to use the writing device in any place, even if the device with a touch screen is held only by the other user.

Furthermore, by adapting the same electronic writing device to collect data on the process of placing a signature, it is possible to check compliance of these data with data on the process of placing a signature, received from the device equipped with a touch screen. This gives additional possibilities to detect manipulations of critical data.

Furthermore, data on the process of placing a hand-written signature, collected from the sensors of the electronic writing device for securing data in combination with additional data on a specific user, stored in a secure memory of the device, give the possibility to authenticate a specific user either by the electronic writing device itself or by an external system.

An advantage of the electronic writing device for securing documents in a digital form according to the invention is that sensors and cryptographic components contained therein can secure material evidence from the process of submitting an electronic signature, which gives a confirmation of performing a hand-written signature with the use of the indicated electronic writing device (e-pen). This results in the possibility to create different schemes of electronic signature, both local and using a trusted third party, ensuring safety of the process of signing documents, and to provide verifiable material evidence from the signing process.

The device, system and method according to the invention are presented in detail in embodiments with reference to the accompanying figures of the drawing, in which:
Fig. 1 shows an overall view of components of the electronic pen according to the invention;
Fig. 2 schematically shows a device included in the system according to the invention;
Fig. 3 schematically shows a method of exchanging data between devices included in the system according to the invention;
Fig. 4 schematically shows a concept of securing a document according to the invention;
Fig. 5 shows a flowchart performed by the method according to the invention.

In the present patent application, the term "connected" in the context of connection between any two components or devices should be understood as widely as possible, as every possible single or multi-way, or direct or indirect, physical or functional connection.

The device for securing a document in a digital form with the use of a hand-written signature according to the invention is an electronic writing device (1) serving, among others, to submit a hand-written signature (Electronic Signature Pen). The electronic writing device (1) according to the invention is preferably a wireless device communicating with any external device (2) equipped with a detector (4) of the process of placing a signature performed with the use of the electronic writing device (1), for example with a device equipped with a touch screen (4), in particular with mobile devices, such as tablets, tablet PCs, notebooks and smartphones, but not exclusively. For example, the electronic writing device (1) can cooperate with a car radio equipped with a touch screen (4) and an appropriate operating system, e.g. Android®. In general, the electronic writing device (1) is used to submit a hand-written signature in devices (2) equipped with a touch screen. In a basic variant, the touch screen is a part of the mobile external device, but other variants are acceptable, where the touch screen (4) is a part of a stationary device, e.g. a desktop computer, an e-kiosk or an ATM.

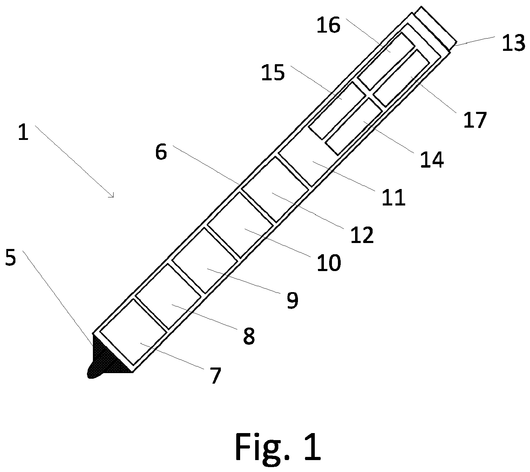

The electronic writing device (1) according to the invention is schematically shown in Fig. 1. All the hereinafter described elements of this device (1) remain interconnected within a housing (6) of the electronic writing device (1), wherein the way they are interconnected is arbitrary and does not constitute the content of the present document.

The electronic writing device (1) according to the invention has a housing (6) which should provide comfort and ergonomics in its use. At the same time, for safety reasons, the housing (6) may be constructed so that it does not allows access to individual components. This is particularly important due to the fact that the task of the electronic writing device (1) (electronic pen) is to ensure the safety level at least equivalent to the safety level while placing a signature on paper. The use of a housing typical of an analogue pen makes the use of the electronic writing device (1) understandable to the user who has used ink and paper so far.

The electronic writing device (1) according to the invention has means (5) for stimulating a detector (4) of the process of placing a signature on an external device, with which the external device (2) is equipped. For example, these means (5) for stimulating the detector (4) of the process of placing a signature are means (5) for writing on a touch screen (4), which allow cooperation of the electronic writing device (1) with any external device (2) equipped with a touch screen (4). The means (5) for stimulating the detector (4) of the process of placing a signature on the external device (2) depend on the technology of the detector (4) in the external device (2). In the case of cooperation with the external device having a touch screen (4), the means (5) for writing on a touch screen are an element/elements allowing collection, through the touch screen (4), information on how the electronic writing device (1) is leaded thereon.

In particular, the term "means (5) for stimulating the detector of the process of placing a signature on the external device" includes, among others, a capacitor cooperating with a capacitive screen, a coil and a conductive end of the housing, cooperating with a resistive screen, a ferrite element cooperating with a screen responsive to the electromagnetic resonance, etc. In other words, the means (5) for stimulating the detector (4) of the process of placing a signature on the external device (2) represent in one embodiment at least one arbitrary active or passive element allowing writing on the touch screen (4) or on any other type of detector (4) of the process of placing a signature, for example a touchpad. The electronic writing device (1) also comprises at least one sensor (7) capable of collecting data on the process of placing a signature. Preferably, it is a touch sensor (7) which can be a sensor in any technology, enabling detection of presence of a pressure, or in the case of a more advanced technology, enabling determination of the pressure force.

Preferably, but not necessarily, the electronic writing device (1) includes a motion sensor (8). The motion sensor (8) allows collection of inertia information at the time of placing a hand-written signature, and also gravity information. As a result, the electronic writing device (1) is equipped with a separate mechanism for tracking the path of placing a hand-written signature in relation to the mechanism for tracking the path of a hand-written signature, incorporated in the detector (4) of the external device (2). Therefore, the electronic writing device (1) may check compliance of data received from the external device (2) with data collected by at least one sensor (7, 8), and thus check the integrity of the process of placing a signature.

The component of the electronic writing device (1), essential for the invention, is a cryptographic component (9) which is a suitably adapted cryptographic processor allowing performance of encryption operations. In particular, it may be a smart card of an external supplier.

The cryptographic component (9) allows realisation of standard cryptographic functions performed by the electronic writing device (1) used to secure data obtained from the process of placing a signature, and consequently to secure the document. Typical functions of the cryptographic component (9) are:
- identification of the cryptographic component (9) itself;
- authentication of the cryptographic component (9) itself;
- calculation of the hash function (C);
- execution of the electronic seal #SEAL operation and/or the electronic signature (D) operation for data collected in the process of using the electronic writing device (1);
- storage of certificates.

Additional functions of the cryptographic component (9) can be:
- CVC support (certificates verified by the cryptographic component itself);
- secure device for submitting an electronic signature (SSCD) or qualified device for submitting an electronic signature;
- encryption;
- providing additional information coming from the cryptographic component (9), such as, e.g.:
- data identifying a specific unit of the electronic writing device (1)
- state of a counter of uses of the electronic writing device (1), allowing for scheduling subsequent uses in time
- date of last use, allowing for protection against any attempt of false substitution with a backward date
- mechanisms allowing for building a secure connection with a trust service provider,
- mechanisms allowing for building an unambiguous association (pairing up) between the electronic writing device (1) and the external device (2) equipped with a touch screen. This type of mechanism is particularly useful because it allows unlocking specific utility functions of the electronic writing device (1) when it establishes a connection with a known external device (2).

All the components of the electronic writing device (1) are supplied with energy from a power source (12), i.e. a battery or an accumulator. In a preferred embodiment, the accumulator (12) can be re-charged via an external connector (13) the primary functionality of which is to ensure the possibility of performing operations in direct (wired) communication between the external device (2) and the electronic writing device (1). In particular, the external connector (13) can be a USB connector.

For the communication between the electronic writing device (1) and any external device, in particular the external device (2) equipped with a touch screen (4), a transceiver unit (10) for wireless communication is used. In particular, it may be a component allowing Bluetooth or WiFi communication. According to the invention, the transceiver unit (10) allows reception, from the external device (2) equipped with a touch screen (4), of information on the process of placing a hand-written signature, i.e. at least information on the path of signature submission.

The electronic writing device (1) is also equipped with a logic circuit (11) including, among others, a logic processor (14) which ensures implementation of the device logic. In practice, the logic processor (14) can be a separate processor or can be implemented within another component, e.g. the transceiver unit (10) or the cryptographic component (9). Furthermore, the logic circuit (11) includes means (15) for gathering data collected in the process of placing a signature in parallel from at least the detector (4) of the process of placing a signature on the external device (2) and at least from sensors (7, 8) of the electronic writing device (1). It can be in particular a secured memory (15). The logic circuit also includes means for gathering a digital characteristic feature of a document being secured (not shown).

Additionally, in order to retain additional information, i.e. a time period in which the signature was submitted, or a time moment at which the signature started to be submitted, the electronic writing device (1) can be equipped with means for gathering data on the moment of start and end of the process of placing a signature (not shown).

In a more extended variant, the logic circuit (11) can be equipped with software means (16) for comparing data on the process of placing a signature, obtained from at least the sensor (7) with data on the process of placing a signature, obtained from the external device (2), as well as with software or hardware means (17) for authenticating the process of placing a hand-written signature (B) based on the comparison of the data on the process of placing a hand-written signature (B'), obtained from at least the sensor (7) with the data on the process of placing a hand-written signature (B"), obtained from the external device (2).

Summing up, the electronic writing device (1) is a device comprising a number of components the aim of which is to collect information in the process of its use and to cryptographically secure this information. The cryptographic securing must in particular ensure integrity of this information and authenticity of its origin from a particular electronic writing device (1).

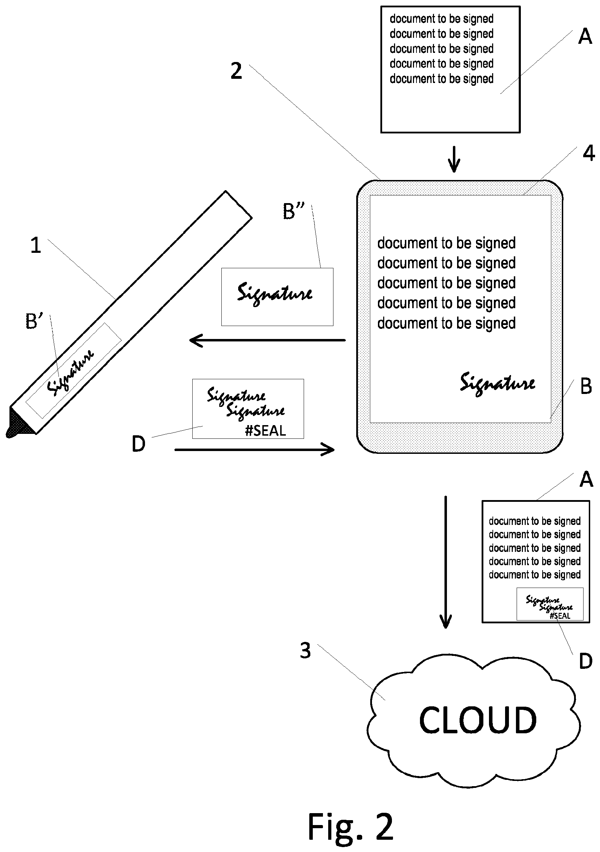

Fig. 2 schematically shows a system for securing a document (A) with the use of a hand-written signature (B). The system according to the invention comprises an electronic writing device (1) connected to an external device (2) equipped with a detector (4) of the process of placing a hand-written signature (B) on the external device, for example a touch screen. The hand-written signature (B) is simultaneously collected by two devices: the electronic writing device (1) which registers the hand-written signature (B) in the form of data (B') and the external device (2) which registers the hand-written signature (B) in the form of data (B"). The external device (2) is adapted for collecting data and for completing the electronic signature (D) in order to secure a document (A). Furthermore, the external device (2) can be connected to another target recipient (3) of information, in particular to a computing cloud (3) or any receiving device (3) connected to the network, to which the document (A) in a digital form, provided with a signature (D), particularly consisting of secured data provided with a seal #SEAL from the process of placing a hand-written signature (B), is sent.

In one variant, the system consists only of the electronic writing device (1) and the external device (2) equipped with a touch screen (4), wherein in said device (2) the document (A) secured with an electronic signature is finally used and stored. The system shown in Fig. 2 should ensure a secure connection between the external device (2), for example a tablet, and the electronic writing device (1) so that information on the signature image and signature path (B"), or other data, could not be modified prior to their cryptographic securing.

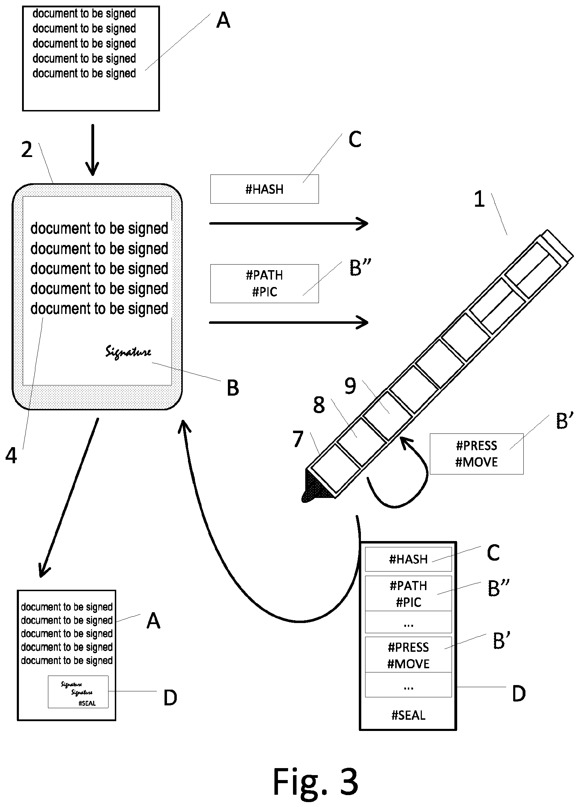

As shown in Fig. 3, for submitting the electronic signature (D) in the system according to the invention, the electronic writing device (1) and the external device (2) provided with the detector (4) of the process of placing a hand-written signature on the external device, for example, with a touch screen (4), are essential. The invention uses the fact that the signature (B) submitted by hand on any carrier, typically paper, is associated with individual biometric features of the person submitting it. Submission of a hand-written signature (B) is the image, motion and the pressure immortalised on the carrier. The system according to the invention aims at immortalising and associating, with the electronic document (A), the image, motion and the pressure constituting data of a hand-written signature (B") registered by the external device (2), for example a tablet (2), equipped with the detector (4) of the process of placing a hand-written signature, for example with a touch screen (4), as well as the image and/or motion and/or pressure constituting data of a hand-written signature (B') registered by the electronic writing device (1) itself with the use of at least a pressure sensor (7) and/or a motion sensor (8).

In the simplest variant, the electronic writing device (1) is responsible for collecting at least information on the motion generated in the course of placing a hand-written signature (B), whereas the device (2) is responsible for collecting at least information on the image and the path of a hand-written signature (B).

Fig. 3 schematically shows a method of exchanging data between devices included in the system according to the invention. To prepare an electronic signature and seal, the electronic writing device (1) requires the external device (2) equipped with the detector (4) of the process of placing a hand-written signature, e.g. with a touch screen (4), to send to it a hash (C) of the document (A) which is to be secured.

Other data sent from the external device (2) equipped with the touch screen (4) to the electronic writing device (1) are data from the process of placing a hand-written signature (B"), collected by this device (2), in particular data on the track #PATH left by the electronic writing device (1) on the touch screen (4), complemented by appropriate timestamps allowing verification of the signature dynamics and an image of the hand-written signature #PIC.

In addition to the information from the outside, the electronic writing device (1) also gathers information on the process of placing a hand-written signature (B'), coming from its sensors (7,8), i.e. data on the pressure #PRES and/or the motion #MOVE in particular phases of signing. Data coming from components of the electronic writing device (1) are also provided with timestamps, wherein the electronic writing device (1) is time-synchronised with the external device (2) equipped with the touch screen (4) before the start of the process of placing a signature, in order to determine the date and start time of placing a signature #TIME. Preferably, the electronic writing device (1) also gathers information on the state of the counter of uses #COUNT.

One skilled in the art will know that there is a possibility to collect additional information coming from sensors of both devices - e.g. user picture from a camera of the external device (2) equipped with a touch screen or fingerprint scan from the electronic writing device (1).

On the basis of all the collected data, the cryptographic component (9) of the electronic writing device (1) performs appropriate operations in order to generate an electronic seal #SEAL and provide with it the hash (C) of the document and other data, including data on the process of placing a signature (B', B"), thus creating secured data (D). The electronic writing device (1) does not enable providing the electronic seal #SEAL in any data collected in a different way than the one described above.

The secured data (D) are transmitted by the electronic writing device (1) to the external device (2). And so, the hash of the document being secured and the image of the hand-written signature in the form of collected data (B') and data (B") or other data from the process of placing a hand-written signature (B) are jointly sent to the external device (2) equipped with the touch screen (4) in order to use or store them in this device (2) or in order to make these data available outside, e.g. to a computing cloud (3) or to any receiving device (3) located, e.g., in a building of public administration. The secured data (D) sent from the electronic writing device (1) constitute in fact an electronic signature (D). In particular, in the external device (2) the secured data (D) are added to the document (A) being signed according to common formats of electronic signatures.

For example, the electronic signature (D) submitted with the use of the electronic writing device (1) and the external device (2), which is provided in the document (A), has a structure according to signatures in AdES formats - according to ETSI standards, Data structure of the signature will be preferably a tree representation:

```
       Signature container
              Data to be signed
                      #HASH of the document to be signed
                      External data
                              #TIME
                              #PATH
                              #PIC
                      Data of the writing device
                              #PRES
                              #MOVE
                              #COUNT
                      Certificate to verify the electronic seal
                      Signature
                              Hash of the signed data
                              Electronic signature of the pen #SEAL
```

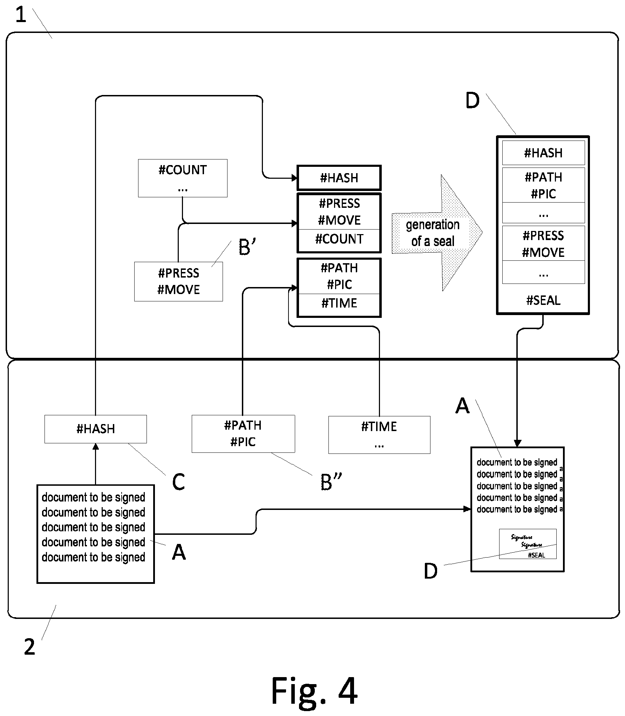

In fig. 4, the concept of securing an electronic document (A) according to the invention is shown. In particular, according to the invention, the important thing is that the material evidence is secured in the electronic writing device (1) itself. Secondly, that the data on the process of placing a signature from two sources are secured, wherein one of the data sources is an electronic writing device (1), used in the process of placing a hand-written signature, which inextricably associates the process of providing the document with the electronic signature (D) with said specific electronic writing device (1) and with said specific process of placing a hand-written signature (B).

The electronic seal #SEAL confirms authenticity and integrity of data as processed according to the established scheme by the electronic writing device (1), in particular, integrity of the data coming from the sensors of the electronic writing device (1) and authenticity of origin of these data from a specific unit of pen are maintained.

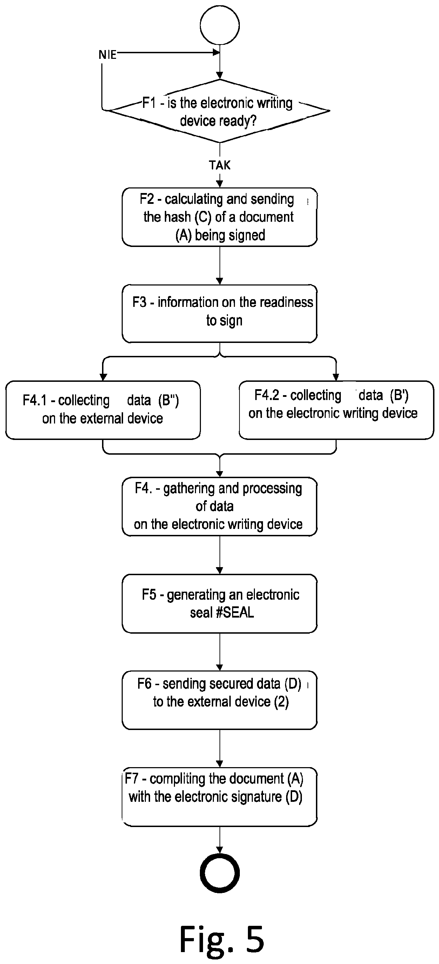

Fig. 5 shows a flowchart of the method for securing a document in a digital form with the use of a hand-written signature according to the invention. According to one embodiment, the method for securing a document in a digital form with the use of a hand-written signature begins with launching an application used for visualisation, by the user, on the external device (2), and with performing the process of signing the electronic document (A). The application provides interaction with the electronic writing device (1). The electronic document (A) may be any document in a digital form, i.e. may be generated electronically or come from digitisation, the only condition being the possibility of visualising it on the screen of the external device (2). The pen may cooperate with various applications from various suppliers.

The document is displayed by the application to the user for review - in such a way that the user can consult the entire content of the document on the touch screen (4) of the external device (2). Depending on application and specific document, the application may indicate a place in which a hand-written signature will be submitted on the document or allow the user to independently chose a place of signing the document. In this chosen place, the hand-written signature will be visualised on the document being signed.

Then, the user is requested to activate the electronic writing device (1). After choosing the document and activating the electronic writing device (1) by the user, the application calculates the document hash (C) on the external device (2) and sends it in a secure manner to the electronic writing device (1). The calculated hash value (C) is a certain digital characteristic feature of the document, inextricably linked to its content. Subsequently, the electronic writing device (1) sends a signal of readiness to submit a hand-written signature (B) to the external device (2), and the user is requested by the application to submit a hand-written signature (B) on the touch screen (4) of the external device (2), e.g. a tablet or a smartphone. The process of handling the electronic writing device (1) should resemble placing a hand-written signature, which is realised using a pen and ink - i.e. like on the paper. In the course of placing a hand-written signature (B) on the touch screen (4) of the external device (2), for example at least the touch sensor (7) of the electronic writing device (1) collects data (B') on the touch onto the screen of the external device (2), distributed in fixed units of time. Simultaneously, information coming from other sensors is recorded in the same units of time. At the same time, the detector (4) collects data (B") from the process of placing a signature, i.e. the touch screen (4) of the external device (2), simulated by the means (5) for writing on the touch screen, collects data on the image and/or the motion, and on the track of guiding the electronic writing device (1) on the detector (4), which include information on the formed image of the signature in units of time.

Eventually, material evidence, collected from the sensors of the external device (2) and the electronic writing device (1), constitutes a matrix divided into successive units of time, wherein for each sensor (7, 8) and for the detector (4), matrix positions include a temporary record allowing for reproduction of dynamic features, associated with the created electronic signature (D) being created. The data in the matrix are marked in a way that allows clear identification whether they come from the external device (2) or from the electronic writing device (1).

Then, the hash (C) of the document to be signed - HASH, created image of the hand-written signature (B), data included in the above-described matrix, divided into marked groups: data (B") coming from the external device (2) and data (B') coming from the electronic writing device (1), additional metadata from the process of signing, are secured by the cryptographic component (9) of the electronic writing device (1). This securing constitutes an electronic seal # SEAL of the provider of the electronic writing device (1), which confirms integrity of all data collected in the process of placing a hand-written signature and ensures authenticity of origin of these data from a given unit of the electronic writing device (1). The electronic seal # SEAL, together with the data it secures, constitutes secured data (D).

The secured data (D) are sent to the external device (2). Application installed on the external device (2) informs about a proper submission of a hand-written signature (B) and makes the signed document (A) containing visualisation of the hand-written signature (B), together with the secured data (D), available. The secured data (D), having been added to the document (A), constitute an electronic signature (D). The document (A), together with the added electronic signature (D), constituting a product of the system operation with the electronic writing device (1), can be made further available through the external device (2) to other systems, applications or hosts, collectively referred to as a target recipient of information (3) in order to perform further verifications, validations or forwarding to the addressee. Further interaction between (1), (2) and (3) is also possible in order to collect and to further secure the document created, e.g. to countersign the signature (D) with an advanced signature of the owner of the device.

According to another embodiment, the method for securing a document (A) in a digital form with the use of a hand-written signature (B) may include a step of pairing or comparing, in the electronic writing device (1), information coming from sensors of the external device (2) (including the detector (4)) and information coming from sensors (7, 8) of the electronic writing device (1) in order to verify their complementarity upon completion of the process of signing. Furthermore, the method may include a test of data consistency between particular records from the sensors even before completion of the process of placing a signature. Information on positive verification may be added to the secured data (D) and marked as information coming from the electronic writing device (1). In yet another embodiment of the method according to the invention, the step of pairing and checking the consistency of data from the process of placing a hand-written signature may be realised by the external device (2) or in other external system, wherein the method of checking consistency, in any of these cases, does not constitute the content of this document.

The system with the electronic writing device (1) allows placing a hand-written signature (D) under an electronic document (A) according to provisions on electronic signatures. Placing a hand-written signature (B) is individual each time, and ensuring integrity and authenticity of the connection between the process of placing a hand-written signature (B) and the signed electronic document (A) constitutes an undeniable signature.

The electronic writing device (1), in the basic variant of the method, does not have to be assigned to a particular person, i.e. the hand-written signature can be submitted with the same writing device (1) by various individuals, and the result of operation of the electronic writing device (1) is secured material evidence (D) from the process of using the electronic writing device (1).

The electronic writing device (1) is delivered to users in a non-personalised form and which simultaneously allows its immediate use. Schemes for securing the material evidence comply with the standards applied for electronic seals and signatures and do not constitute the content of the present document.

The right combination of components of the electronic writing device (1) and collecting the material evidence with their use ensure not only integrity but also uniqueness of the generated electronic signature, which is typical of hand-written signatures.

Additional functions of the electronic writing device (1) may allow association of the electronic writing device (1) with a specific natural person and providing it with an exclusive control over its use. Also, a variant of the electronic writing device (1) is possible in which a hand-written signature (B) is submitted by one person, and an advanced electronic signature, with the use of certificates located in the cryptographic component (9), is submitted by the owner of the electronic writing device (1), which is an additional confirmation of placing a signature by the first person. The electronic writing device (1) and the system for securing a document in a digital form with an electronic signature or with an electronic seal are useful, e.g., in the notary office.

One skilled in the art will know that the electronic writing device (1) can be extended by additional components not mentioned in the present document, in particular by components allowing collection of further material evidence from the process of placing a signature (B) - e.g. serving for geographic localisation, optical sensors, like cameras, biometric sensors, allowing additional identification of the signer. It is also possible to extend the electronic writing device (1) by a microphone allowing collection of spoken information or a speaker allowing reading of the signed content.

An additional component can be a sensor actuating the electronic writing device (1) based on the hand touch, a photosensitive element or a button temporarily actuating the operation of the device, as well as various types of biometric sensors. An additional modification of the system according to the invention could be other mechanisms of communication between the electronic writing device (1) and other external devices (2), such as optic interfaces, proximity or contact interfaces.

One skilled in the art will know that the electronic writing device (1) according to the invention can cooperate also with other solutions and its use can be wider than providing a document in a digital form with an electronic signature or an electronic seal.

## Claims

1. An electronic writing device for securing a document in a digital form with the use of a hand-written signature, comprising
- a housing,
- a power source,
**characterized in that** it further comprises:
- a transceiver unit adapted for communication with an external device, the transceiver unit adapted to allow reception, from the external device (2) equipped with a touch screen (4), of information on the process of placing a hand-written signature,
- a cryptographic component,
- at least one internal sensor capable of collecting data on the process of placing a signature,
- means for gathering a digital characteristic feature of the document being secured,
- means (5) for stimulating, in the external device (2), a detector of the process of placing a signature so as the external device can gather information on the process of placing a signature
- means (15) for simultaneously gathering data (B") on the process of placing a hand-written signature (B), sent from the external device (2), and data (B') on the process of placing a hand-written signature obtained from at least one internal sensor (7), and **in that**
- the cryptographic component is adapted to generate an electronic seal and provide it at least in the data (B') on the process of placing a hand-written signature obtained from at least one internal sensor, the data (B") from the process of placing a hand-written signature obtained from the external device and the digital characteristic feature (C) of the document being secured.

2. The device according to claim 1, **characterised in that** it additionally has means (16) for comparing data (B") on the process of placing a signature, obtained from at least one internal sensor (7), with data (B') on the process of placing a signature, obtained from the external device (2).

3. The device according to claim 1 or 2, **characterised in that** the cryptographic component (9) is adapted to submit an advanced electronic signature.

4. The device according to claim 3, **characterised in that** it additionally has means (17) for authentication of the process of placing a signature based on a comparison of data (B') on the process of placing a signature, obtained from at least one internal sensor (7), with data (B") on the process of placing a signature, obtained from the external device (2).

5. The device according to claim 3, **characterised in that** the cryptographic component (9) is adapted to uniquely pair with the external device (2).

6. A system for securing a document in a digital form with the use of a hand-written signature, comprising an electronic writing device adapted to collect data on the process of placing a signature, and an external device communicating with it which is adapted to generate and send at least one digital characteristic feature of the document being secured, **characterised in that**
- the external device (2) is equipped with a detector (4) of the process of placing a signature, the process being realised using the electronic writing device (1),
- the electronic writing device (1) is equipped with means (5) for stimulating, in the external device (2), the detector (4) of the process of placing a signature, so as the external device can gather information on the process of placing a signature with the electronic writing device
- the electronic writing device (1) is equipped with means (15) for simultaneously gathering data (B") on the process of placing a hand-written signature (B), sent from the external device (2), and data (B') on the process of placing a hand-written signature obtained from at least one internal sensor (7),
- the electronic writing device (1) is adapted to generate an electronic seal and provide it in at least in the data (B') on the process of placing a hand-written signature obtained from at least one internal sensor (7), the data (B") from the process of placing a hand-written signature obtained from the external device and the digital characteristic feature (C) of the document being secured.

7. The system according to claim 6, **characterised in that** the external device (2) generates and sends, to the electronic writing device (1), a hash (C) of the document (A) which is to be secured.

8. The system according to claim 6, **characterised in that** the electronic writing device (1) additionally has means (16) for comparing data on the process of placing a signature, obtained from at least a sensor (7), with data on the process of placing a signature, obtained from the external device (2).

9. The system according to claim 6 or 7, **characterised in that** the cryptographic component (9) of the electronic writing device (1) is adapted to submit an advanced electronic signature.

10. The system according to claim 8, **characterised in that** it additionally has means (17) for authentication of the process of placing a signature based on a comparison of data (B') on the process of placing a hand-written signature (B), obtained from at least one internal sensor (7), with data (B") on the process of placing a signature, obtained from the external device (2).

11. The system according to any one of claims 6 to 10, **characterised in that** the detector (4) of the process of placing a signature, the process being realised using the electronic writing device (1), is a touch screen (4).

12. A method of securing a document in a digital form with the use of a hand-written signature, comprising
- a step of placing a hand-written signature (B) by means of an electronic writing device (1) to collect data on the process of placing a hand-written signature (B) therein,
- a step of gathering, in the electronic writing device (1), at least one digital characteristic feature of the document being secured,
- a step of securing the electronic document with an electronic signature **characterised in that** the step of placing a hand-written signature (B) with the use of the electronic writing device (1) is performed on an external device (2) equipped with a detector (4) of the process of placing a signature, and **in that** the method further comprises:
- a step of gathering, in the electronic writing device (1), data (B") on the process of placing a hand-written signature (B), obtained by the external device (2) equipped with the detector (4) of the process of placing a signature, and data (B') on the process of placing a hand-written signature (B), obtained at least from one internal sensor (7), data (B') and data (B") being collected in parallel,
- a step of generating an electronic seal which protects integrity and authenticity of the data package (D): digital characteristic feature (C) of the document (A), and data (B', B") of information on the process of placing a hand-written signature (B), obtained in parallel from at least one internal sensor of the electronic writing device (1) and received from the external device (2) equipped with the detector (4) of the process of placing a signature, the generated electronic seal uniquely identifying electronic writing device (1) and cryptographic component (9);
- a step of sending the so secured data (D) which constitute an electronic signature to the external device (2).

13. The method according to claim 11, **characterised in that** the step of gathering, in the electronic writing device (1), at least one digital characteristic feature (C) of the document being secured consists in gathering a hash (C) of the document (A) to be secured, generated by the external device (2).

14. The method according to claim 11, **characterised in that** it further comprises a step of comparing, in the electronic writing device (1), data (B') on the process of placing a signature, obtained from at least a sensor (7), with data (B") on the process of placing a signature, obtained from the external device (2), and/or authenticating, based on this comparison, the process of placing a hand-written signature.

15. The method according to claim 14, **characterised in that** it further comprises a step of submitting, in the electronic writing device (1), an advanced electronic signature.

## Patentansprüche

1. Elektronische Schreibvorrichtung zum Sichern eines Dokuments in digitaler Form unter Verwendung einer handschriftlichen Signatur, umfassend
- ein Gehäuse,
- eine Stromquelle,
**dadurch gekennzeichnet, dass** sie ferner umfasst
- eine Sendeempfängereinheit, die zur Kommunikation mit einer externen Vorrichtung angepasst ist, wobei die Sendeempfängereinheit angepasst ist, um Informationen über den Prozess des Platzierens einer handschriftlichen Signatur von der mit einem Touchscreen (4) ausgestatteten externen Vorrichtung (2) zu empfangen,
- eine kryptographische Komponente,
- mindestens einen internen Sensor, der fähig ist, Daten über den Prozess des Platzierens einer Signatur zu sammeln,
- Mittel zum Erfassen von einem digitalen charakteristischen Merkmal des zu sichernden Dokuments,
- Mittel (5) zum Stimulieren, in der externen Vorrichtung (2), eines Detektors für den Prozess des Platzierens einer Signatur, so die externe Vorrichtung Informationen über den Prozess des Platzierens einer Signatur sammeln kann,
- Mittel (15) zum gleichzeitigen Erfassen von Daten (B") über den Prozess des Platzierens einer handschriftlichen Signatur (B), die von der externen Vorrichtung (2) gesendet werden, und von Daten (B') über den Prozess des Platzierens einer handschriftlichen Signatur, die von mindestens einem internen Sensor (7) erhalten werden,
und **dass**
- die kryptographische Komponente angepasst ist, um ein elektronisches Siegel zu erzeugen und um dieses zumindest in den Daten (B') über den Prozess des Platzierens einer Signatur, die von mindestens einem internen Sensor (7) erhalten werden, in den Daten (B") aus dem Prozess der Platzierung einer Signatur, die von der externen Vorrichtung erhalten werden, und in einem digitalen charakteristischen Merkmal (C) des zu sichernden Dokuments, bereitzustellen.

2. Die Vorrichtung nach Anspruch 1, **dadurch gekennzeichnet, dass** sie zusätzlich Mittel (16) zum Vergleichen von Daten (B") über den Prozess des Platzierens einer Signatur, die von mindestens einem internen Sensor (7) erhalten werden, mit Daten (B') über den Prozess des Platzierens einer Signatur, die von der externen Vorrichtung (2) erhalten werden, aufweist.

3. Die Vorrichtung nach Anspruch 1 oder 2, **dadurch gekennzeichnet, dass** die kryptographische Komponente (9) angepasst ist, um eine fortgeschrittene elektronische Signatur bereitzustellen.

4. Die Vorrichtung nach Anspruch 3, **dadurch gekennzeichnet, dass** sie zusätzlich Mittel (17) zur Authentifizierung des Prozesses des Platzierens einer Signatur aufweist, wobei die Authentifizierung auf einem Vergleich von Daten (B') über den Prozess des Platzierens einer Signatur, die von mindestens einem internen Sensor (7) erhalten werden, mit Daten (B") über den Prozess des Platzierens einer Signatur, die von der externen Vorrichtung (2) erhalten werden, basiert.

5. Die Vorrichtung nach Anspruch 3, **dadurch gekennzeichnet, dass** die kryptographische Komponente (9) angepasst ist, um eindeutig mit der externen Vorrichtung (2) zu paaren.

6. System zum Sichern eines Dokuments in einer digitalen Form unter Verwendung einer handschriftlichen Signatur, umfassend eine elektronische Schreibvorrichtung, die angepasst ist, um Daten über den Prozess des Platzierens einer Signatur zu sammeln, und eine damit kommunizierende externe Vorrichtung, die angepasst ist, um mindestens ein digitales Merkmal des zu sichernden Dokuments zu erzeugen und zu senden, **dadurch gekennzeichnet, dass**
- die externe Vorrichtung (2) mit einem Detektor (4) für den Prozess des Platzierens einer Signatur ausgestattet ist, wobei der Prozess unter Verwendung des elektronischen Schreibvorrichtung (1) realisiert wird,
- die elektronische Schreibvorrichtung (1) in der externen Vorrichtung (2) mit Mitteln (5) zum Stimulieren des Detektors (4) für den Prozess des Platzierens einer Signatur ausgestattet ist, so die externe Vorrichtung Informationen über den Prozess des Platzierens einer Signatur erfassen kann,
- die elektronische Schreibvorrichtung (1) mit Mittel (15) zum gleichzeitigen Erfassen von Daten (B") über den Prozess des Platzierens einer handschriftlichen Signatur (B), die von der externen Vorrichtung (2) gesendet werden, und von Daten (B') über den Prozess des Platzierens einer handschriftlichen Signatur, die von mindestens einem internen Sensor (7) erhalten werden, ausgestattet ist,
- die elektronische Schreibvorrichtung (1) angepasst ist, um ein elektronisches Siegel zu erzeugen und um dieses zumindest in Daten (B') über den Prozess des Platzierens einer Signatur, die von mindestens einem internen Sensor (7) erhalten werden, in Daten (B") aus dem Prozess der Platzierung einer Signatur, die von der externen Vorrichtung erhalten werden, und in einem digitalen charakteristischen Merkmal (C) des zu sichernden Dokuments, bereitzustellen.

7. Das System nach Anspruch 6, **dadurch gekennzeichnet, dass** die externe Vorrichtung (2) einen Hash (C) des zu sichernden Dokuments (A) erzeugt und an das elektronische Schreibvorrichtung (1) sendet.

8. Das System nach Anspruch 6, **dadurch gekennzeichnet, dass** die elektronische Schreibvorrichtung (1) zusätzlich Mittel (16) zum Vergleichen von Daten über den Prozess des Platzierens einer Signatur, die von mindestens einem Sensor (7) erhalten werden, mit Daten über den Prozess des Platzierens einer Signatur, die erhalten von der externen Vorrichtung erhalten werden (2), aufweist.

9. Das System nach Anspruch 6 oder 7, **dadurch gekennzeichnet, dass** die kryptographische Komponente (9) in der elektronischen Schreibvorrichtung (1) angepasst ist, um eine fortgeschrittene elektronische Signatur bereitzustellen.

10. Das System nach Anspruch 8, **dadurch gekennzeichnet, dass** es zusätzlich Mittel (17) zur Authentifizierung des Prozesses des Platzierens einer Signatur aufweist, wobei die Authentifizierung auf einem Vergleich von Daten (B') über den Prozess des Platzierens einer Signatur, die von mindestens einem internen Sensor (7) erhalten werden, mit Daten (B") über den Prozess des Platzierens einer Signatur, die von der externen Vorrichtung (2) erhalten werden, basiert.

11. Das System nach einem der Ansprüche 6 bis 10, **dadurch gekennzeichnet, dass** der Detektor (4) für den Prozess des Platzierens einer Signatur ein Touchscreen (4) ist, wobei der Prozess unter Verwendung der elektronischen Schreibvorrichtung (1) realisiert wird.

12. .Verfahrenzum Sichern eines Dokuments in digitaler Form unter Verwendung einer handschriftlichen Signatur, umfassend
- einen Schritt des Platzierens einer handschriftlichen Signatur (B) mittels einer elektronischen Schreibvorrichtung (1), um Daten über den Prozess des Platzierens einer handschriftlichen Signatur (B) darin zu sammeln,
- einen Schritt des Erfassens von wenigstens einem digitalen charakteristischen Merkmal des zu sichernden Dokuments in der elektronischen Schreibvorrichtung (1),
- einen Schritt des Sicherns des elektronischen Dokuments mit einer elektronischen Signatur, **dadurch gekennzeichnet, dass** der Schritt des Platzierens einer handschriftlichen Signatur (B) unter Verwendung von der elektronischen Schreibvorrichtung (1) auf einer externen Vorrichtung (2), die mit einem Detektor (4) für den Prozess des Platzierens einer Signatur ausgestattet ist, ausgeführt wird,
und **dass** das Verfahren ferner umfasst:
- einen Schritt des Erfassens von Daten (B") über den Prozess des Platzierens einer handschriftlichen Signatur (B), die von dem externen Vorrichtung (2), die mit dem Detektor (4) für den Prozess des Platzierens einer Signatur ausgestattet ist, erhalten werden, und von Daten (B') über den Prozess des Platzierens einer handschriftlichen Signatur (B), die von mindestens einem internen Sensor (7) erhalten werden, in der elektronischen Schreibvorrichtung (1), wobei Daten (B') und Daten (B") parallel gesammelt werden,
- einen Schritt des Erzeugens eines elektronischen Siegels, das die Integrität und Authentizität des Datenpakets (D): des digitalen Merkmal (C) des Dokuments (A), und Daten (B', B") von Informationen über den Prozess des Platzierens einer handschriftlichen Signatur (B), die parallel von mindestens einem internen Sensor der elektronischen Vorrichtung (1) erhalten werden und von der externen Vorrichtung (2), die mit dem Detektor (1) für den Prozess ausgestattet ist, empfangen werden, schützt, wobei das erzeugte elektronische Siegel die elektronische Schreibvorrichtung (1) und kryptographische Komponente (9) eindeutig identifiziert;
- einen Schritt des Sendens der so gesicherten Daten (D), die eine elektronische Signatur bilden, an die externe Vorrichtung (2).

13. Das Verfahren nach Anspruch 11, **dadurch gekennzeichnet, dass** der Schritt des Erfassens in der elektronischen Schreibvorrichtung (1) mindestens eines digitalen charakteristischen Merkmals (C) des zu sichernden Dokuments darin besteht, einen durch die externe Vorrichtung (2) erzeugten Hash (C) des zu sichernden Dokuments (A) zu sammeln.

14. Das Verfahren nach Anspruch 11, **dadurch gekennzeichnet, dass** es ferner einen Schritt des Vergleichens von Daten (B') über den Prozess des Platzierens einer Signatur, die von mindestens einem Sensor (7) erhalten werden, mit Daten (B") über den Vorgang des Platzierens einer Signatur, die von der externen Vorrichtung (2) erhalten werden, in der elektronischen Schreibvorrichtung (1) und/oder einer auf diesem Vergleich basierten Authentifizierung des Prozesses des Platzierens einer handschriftlichen Signatur, umfasst.

15. Das Verfahren nach Anspruch 14, **dadurch gekennzeichnet, dass** es ferner einen Schritt des Bereitstellens einer fortgeschrittenen elektronischen Signatur in der elektronischen Schreibvorrichtung (1), umfasst.

## Revendications

1. Dispositif d'écriture électronique pour sécuriser un document sous forme numérique en utilisant une signature manuscrite, comprenant
- un logement
- une source d'alimentation,
- une unité émettrice-réceptrice adaptée pour communiquer avec un dispositif externe, l'unité émettrice-réceptrice étant adaptée pour permettre la réception, à partir du dispositif externe (2), équipé d'un écran tactile (4), d'informations sur le processus de placement d'une signature manuscrite,
- un composant cryptographique,
- au moins un capteur interne capable de collecter des données sur le processus de placement d'une signature,
- des moyens de rassembler une caractéristique numérique du document sécurisé,
**caractérisé en ce qu'**il comprend en outre:
- des moyens (5) pour stimuler, dans le dispositif externe (2), un détecteur du processus de placement d'une signature afin que le dispositif externe puisse rassembler des informations sur le processus de placement d'une signature,
- des moyens (15) pour rassembler simultanément des données (B") sur le processus de placement d'une signature manuscrite (B), envoyées depuis le dispositif externe (2), et des données (B') sur le processus de placement d'une signature manuscrite obtenues à partir d'au moins un capteur interne (7), **et en ce que**
- le composant cryptographique (9) est adapté pour générer un sceau électronique qui protège l'intégrité et l'authenticité du paquet de données suivant: les données (B') sur le processus de placement d'une signature manuscrite obtenues à partir d'au moins un capteur interne (7), les données (B") sur le processus de placement d'une signature manuscrite obtenues à partir du dispositif externe (2) et une caractéristique numérique (C) du document sécurisé, le sceau électronique généré identifiant de manière unique le dispositif d'écriture électronique (1) et le composant cryptographique (9).

2. Dispositif selon la revendication 1, **caractérisé en ce qu'**il comporte en outre des moyens (16) pour comparer les données (B") sur le processus de placement d'une signature obtenues à partir d'au moins un capteur interne (7) avec les données (B') sur le processus de placement d'une signature obtenues à partir du dispositif externe (2).

3. Dispositif selon la revendication 1 ou 2, **caractérisé en ce que** le composant cryptographique (9) est adapté pour soumettre une signature électronique avancée.

4. Dispositif selon la revendication 3, **caractérisé en ce qu'**il comporte en outre des moyens (17) d'authentification du processus de placement d'une signature sur la base d'une comparaison des données (B') sur le processus de placement d'une signature obtenues à partir d'au moins un capteur interne (7), avec les données (B ") sur le processus de placement d'une signature obtenues à partir du dispositif externe (2).

5. Dispositif selon la revendication 3, **caractérisé en ce que** le composant cryptographique (9) est adapté pour être couplé de manière unique avec le dispositif externe (2).

6. Système pour sécuriser un document sous forme numérique en utilisant une signature manuscrite, comprenant un dispositif d'écriture électronique adapté pour collecter des données sur le processus de placement d'une signature, et un dispositif externe communiquant avec celui-ci, adapté pour générer et envoyer au moins une caractéristique numérique du document sécurisé, **caractérisé en ce que**
- le dispositif externe (2) est équipé d'un détecteur (4) du processus de placement d'une signature, le processus étant réalisé à l'aide du dispositif d'écriture électronique (1),
- le dispositif d'écriture électronique (1) est équipé de moyens (5) pour stimuler, dans le dispositif externe (2), le détecteur (4) du processus de placement d'une signature, afin que le dispositif externe puisse rassembler des informations sur le processus de placement d'une signature avec le dispositif d'écriture électronique,
- le dispositif d'écriture électronique (1) est équipé de moyens (15) pour collecter simultanément des données (B") sur le processus de placement d'une signature manuscrite (B) envoyée depuis le dispositif externe (2) et de données (B') sur le processus de placement d'une signature manuscrite obtenues à partir d'au moins un capteur interne (7),
- le dispositif d'écriture électronique (1) est adapté pour générer un sceau électronique qui protège l'intégrité et l'authenticité du paquet de données: les données (B') sur le processus de placement d'une signature manuscrite obtenues à partir d'au moins un capteur interne (7) et les données (B") sur le processus de placement d'une signature manuscrite obtenues à partir du dispositif externe (2) et une caractéristique numérique (C) du document sécurisé, le sceau électronique généré identifiant de manière unique le dispositif d'écriture électronique (1) et le composant cryptographique (9).

7. Système selon la revendication 6, **caractérisé en ce que** le dispositif externe (2) génère et envoie au dispositif d'écriture électronique (1) un hash (C) du document (A) à sécuriser.

8. Système selon la revendication 6, **caractérisé en ce que** le dispositif d'écriture électronique (1) comporte en outre des moyens (16) pour comparer les données sur le processus de placement d'une signature, obtenues à partir d'au moins un capteur (7), avec les données sur le processus de placement d'une signature, obtenues à partir du dispositif externe (2).

9. Système selon la revendication 6 ou 7, **caractérisé en ce que** le composant cryptographique (9) du dispositif d'écriture électronique (1) est adapté pour soumettre une signature électronique avancée.

10. Système selon la revendication 8, **caractérisé en ce qu'il** comporte en outre des moyens (17) d'authentification du processus de placement d'une signature sur la base d'une comparaison de données (B') sur le processus de placement d'une signature manuscrite (B) obtenues à partir d'au moins un capteur interne (7), avec les données (B") sur le processus de placement d'une signature obtenues à partir du dispositif externe (2).

11. Système selon l'une quelconque des revendications 6 à 10, **caractérisé en ce que** le détecteur (4) du processus de placement d'une signature, le processus étant réalisé à l'aide du dispositif d'écriture électronique (1), est un écran tactile (4).

12. Procédé de sécurisation d'un document sous forme numérique en utilisant une signature manuscrite, comprenant
- une étape de placement d'une signature manuscrite (B) au moyen d'un dispositif d'écriture électronique (1) pour y collecter les données sur le processus de placement d'une signature manuscrite (B),
- une étape de rassemblement, dans le dispositif d'écriture électronique (1), d'au moins une caractéristique numérique du document sécurisé,
- une étape de sécurisation du document électronique avec une signature électronique **caractérisée en ce que** l'étape de placement d'une signature manuscrite (B) en utilisant le dispositif d'écriture électronique (1) est effectuée sur un dispositif externe (2) équipé d'un détecteur (4) du processus de placement d'une signature, et **en ce que** le procédé comprend en outre:
- une étape de rassemblement, dans le dispositif d'écriture électronique (1), de données (B ") sur le processus de placement d'une signature manuscrite (B), obtenues par le dispositif externe (2) équipé du détecteur (4) du processus de placement d'une signature et les données (B ') sur le processus de placement d'une signature manuscrite (B), obtenues au moins à partir d'un capteur interne (7), les données (B') et les données (B') étant collectées en parallèle,
- une étape de génération d'un sceau électronique qui protège l'intégrité et l'authenticité du paquet de données (D): la caractéristique numérique (C) du document (A) et les données (B', B") d'informations sur le processus de placement d'une signature manuscrite (B) obtenues en parallèle d'au moins un capteur interne du dispositif d'écriture électronique (1) et du dispositif externe (2) équipé du détecteur (4) du processus de placement d'une signature, le sceau électronique généré identifiant de manière unique le dispositif d'écriture électronique (1) et le composant cryptographique (9);
- une étape d'envoi des données ainsi sécurisées (D) constituant une signature électronique vers le dispositif externe (2).

13. Procédé selon la revendication 11, **caractérisé en ce que** l'étape de rassemblement, dans le dispositif d'écriture électronique (1), au moins une caractéristique numérique (C) du document sécurisé consiste à rassembler un hash (C) du document (A) à sécuriser, généré par le dispositif externe (2).

14. Procédé selon la revendication 11, **caractérisé en ce qu'**il comprend en outre une étape de comparaison, dans le dispositif d'écriture électronique (1), des données (B') sur le processus de placement d'une signature, obtenues à partir d'au moins un capteur (7), avec les données (B") sur le processus de placement d'une signature, obtenues à partir du dispositif externe (2), et/ou d'authentification, sur la base de cette comparaison, du processus de placement d'une signature manuscrite.

15. Procédé selon la revendication 14, **caractérisé en ce qu'**il comprend en outre une étape de soumission, dans le dispositif d'écriture électronique (1), une signature électronique avancée.
